# EUROPÄISCHE PATENTSCHRIFT

(11) **EP 0 891 164 B1**
(45) Veröffentlichungstag und Bekanntmachung des Hinweises auf die Patenterteilung: **03.05.2000**
(21) Anmeldenummer: 97902281.1
(22) Anmeldetag: 31.01.1997
(51) Int. Cl.: A61C 19/00

(54) **VORRICHTUNG ZUM AUSHÄRTEN EINES LICHTHÄRTENDEN KUNSTSTOFF-FÜLLUNGSMATERIALS**
DEVICE FOR CURING A PHOTOCURABLE PLASTIC FILLER
DISPOSITIF DE DURCISSEMENT D'UNE MATIERE PLASTIQUE DE REMPLISSAGE PHOTODURCISSABLE

(30) Priorität: 04.04.1996 DE 19613566
(43) Veröffentlichungstag der Anmeldung: 20.01.1999
(73) Patentinhaber: RECHMANN, Peter, 40627 Düsseldorf (DE)
(72) Erfinder: RECHMANN, Peter, 40627 Düsseldorf (DE)
(74) Vertreter: Dallmeyer, Georg, Dipl.-Ing.
(86) Internationale Anmeldenummer: EP9700430
(87) Internationale Veröffentlichungsnummer: WO9737611

(56) Entgegenhaltungen:
- EP-A- 0 286 558
- EP-A- 0 375 161
- WO-A-94/26203
- US-A- 4 673 353

## Beschreibung

Die Erfindung betrifft eine Vorrichtung zum Aushärten eines lichthärtenden Füllungsmaterials, z.B. eines Kunststoff- oder Kompositmaterial, nach dem Oberbegriff des Anspruchs 1.

Derartige Kunststoff-Füllungsmaterialien werden als Ersatzstoff für Amalgam in die Zahnkavität in plastischem mehr oder weniger viskösem Zustand eingebracht und härten anschließend dort aus. Die Polymerisation kann durch Licht eingeleitet werden, falls ein entsprechender Fotoinitiator dem Füllungsmaterial zugesetzt wurde. Die Füllungsmaterialien werden durch Lichtpolymerisation gehärtet. Die Polymerisation von Dental-Kunststoffen für Zahnkavitäten erfolgt mit blauem Licht, z.B. mit einer Wellenlänge von 420 bis 470 nm, also im Bereich der maximalen Absorption eines in dem Kunststoff-Füllungsmaterials verwendeten Initiators, z.B. Campfer-Chinon. Die Polymerisationsschrumpfung der Kunststoff-Füllungsmaterialien führt zu einer Randspaltenbildung am Rand der Zahnkavität und Spannung innerhalb des Füllungsmaterials durch Aufbau innerer Spannungen. Diese Spannungen führen vor allem bei Belastungen zum Verlust des dichten Verschlusses der Zahnkavität. Bakterien können durch die Randspalten in die Tiefe der Zahnkavität gelangen, wo sie erneut die Kariesbildung ermöglichen.

Ein weiteres Problem bei der Lichtpolymerisation besteht darin, daß das Füllungsmaterial immer in Richtung auf die aushärtende Lichtquelle hin polymerisiert. Zunächst polymerisieren Bereiche, die der Lichtquelle am nächsten zugewandt sind. Kunststoff-Füllungen polymerisieren daher immer klassischerweise zuletzt an den Begrenzungen der Zahnkavität. Dies führt zu massiven Spannungskräften an der Grenzfläche der Zahnhartsubstanz/Kunststoff. Die Spannungen werden umso komplexer je mehr Wände eine Zahnkavität aufweist.

Es ist versucht worden, das bei der Lichtpolymerisation entstehende Problem dadurch abzuschwächen, daß die Lichtquelle seitlich angeordnet wird, so daß das Polymerisationslicht durch den Zahn hindurchstrahlt und damit eine Polymerisation von dem Zahnkavitätsrand ausgehend bewirken soll.

Die herkömmlich verwendeten Polymerisationslichtquellen mit einer Wellenlänge zwischen 400 und 500 nm und einer Leistungsdichte von < 200 mW/cm² werden allerdings beim Durchstrahlen durch Dentin und durch die äußere Schmelzschicht stark abgeschwächt. Diese Methode ist daher nur bei sehr dünnen Dentin-/Schmelzwänden anwendbar. Bei größeren Wandstärken kann das Kunststoff-Füllungsmaterial nicht aushärten.

Es ist bereits vorgeschlagen worden, als Lichtquelle für die Kunststoff-Polymerisation einen Argon-Laser mit einer Wellenlänge von 488 nm zu verwenden. Ein derartiger Laser weist eine Wellenlänge auf, die im Absorptionsmaximum des Fotoinitiators liegt, so daß sich abgesehen von der Strahlungsintensität ein solcher Laser nicht von herkömmlichen Polymerisationslichtquellen unterscheidet. Das Laserlicht wird in dem Kunststoff-Füllungsmaterial stark absorbiert und hat daher eine geringe Eindringtiefe und den Nachteil einer Randspaltenbildung.

Aus der EP-A 0 375 161 ist ein Verfahren zum Verbessern der Aushärtung von lichthärtendem Kunststoff-Füllungsmaterial bekannt. Dieses Kunststoffmaterial ist in hohem Maße mit Füllstoffen, wie amorphes Silizium, Quarz oder Glaspulver gefüllt, das eine begrenzte Transparenz für die aushärtenden Lichtstrahlen aufweist.

Der Erfindung liegt die Aufgabe zugrunde, eine Vorrichtung sowie ein Verfahren zum Aushärten eines lichthärtenden Kunststoff-Füllungsmaterials anzugeben, mit dem der Spannungsaufbau bei der Polymerisationsschrumpfung erheblich reduziert werden kann.

Zur Lösung dieser Aufgabe dienen die Merkmale des Anspruchs 1.

Die Erfindung sieht in vorteilhafter Weise vor, daß sukzessive geringe Kunststoff-Füllungsmaterialmengen in die Zahnkavität eingebracht und ausgehärtet werden. Vorzugsweise werden diese Kunststoff-Füllungsmaterialmengen, die sich zu dünnen Schichten ausbreiten, von einem separaten Applikator oder dem Laserlicht-Applikator in die Zahnkavität eingespritzt und unmittelbar danach durch Laserlichtapplikation polymerisiert.

Die Bestrahlung mit Laserlicht führt zu einer besseren Vernetzung des Kunststoff-Füllungsmaterials aufgrund der höheren Leistungsdichte des Laserlichtes im Vergleich zu herkömmlichen Polymerisationslichtquellen und damit zu besseren Materialeigenschaften. Diese bessere Vernetzung konnte bisher nur im Experiment bei extraoraler Nachpolymerisation erreicht werden und war daher für die Praxis nicht einsetzbar. Durch die bessere Vernetzung kommt es zu einer Reduktion der freien bzw. freisetzbaren Monomere des Kunststoff-Füllungsmaterials. Damit ist auch eine Reduktion der Toxizität des Kunststoff-Füllungsmaterials verbunden.

Es wird eine Laserlichtquelle verwendet, deren Laserlichtstrahl eine Wellenlänge aufweist, die von dem Kunststoff-Füllungsmaterial nur schwach absorbiert wird und unterhalb des Absorptionsmaximums des in dem Kunststoff-Füllungsmaterial verwendeten Initiators liegt. Ein derartiger Laserlichtstrahl wird vom dem Kunststoff-Füllungsmaterial kaum absorbiert, so daß der Laserlichtstrahl durch das Kunststoff-Füllungsmaterial hindurch bis auf die die Zahnkavität begrenzende Zahnhartsubstanz strahlt. Auf der Zahnhartsubstanz wird der Laserlichtstrahl z.T. reflektiert und z.T. dazu verwendet, die Zahnhartsubstanz zu einer Fluoreszenz-Emissionsstrahlung anzuregen. Die Fluoreszenz-Emissionsstrahlung erfolgt in einem Wellenlängenbereich, der dem Absorptionsmaximum des Initiators im Kunststoff-Füllungsmaterial entspricht. Die Anregung zu einer Fluoreszenzlicht-Emissionsstrahlung führt dazu, daß das Aushärten des Kunststoff-Füllungsmaterials von den Wänden der Zahnkavität ausgeht, also auf die Zahnoberfläche gerichtet und nicht auf die Lichtquelle hin gerichtet ist.

Die Polymerisation durch das Fluoreszenzlicht wird teilweise überlagert von der erheblich reduzierten unmittelbaren Polymerisation durch den Laserlichtstrahl und dessen reflektiertem Anteil der ebenso zu einer Polymerisation zur Zahnoberfläche hin führt (vergleichbar dem Fluoreszenzlicht). Im Resultat führt dies zu einem erheblichen Spannungsabbau, so daß es nicht mehr zu einer Randspaltenbildung kommen kann.

Diese Vorgehensweise ist insbesondere vorteilhaft bei der Verankerung der ersten dünnen Kunststoff-Füllungsmaterialschichten mit der Zahnhartsubstanz. Mit größer werdender Schichtdicke bzw. Entfernung von dem Zahnhartmaterial wird zunehmend direkt mit dem Laserlichtstrahl im Rahmen der Restabsorption des Kunststoff-Füllungsmaterials polymerisiert.

Es wird ein Laserlichtstrahl mit einer Wellenlänge im Bereich von 350 bis 440 nm, vorzugsweise 360 bis 425 nm, verwendet. Besonders bevorzugt ist dabei ein Wellenlängenbereich zwischen 370 und 410 nm.

Eine Fluoreszenz-Emissionsstrahlung der Zahnhartsubstanz erfolgt in einem Wellenbereich zwischen ca. 400 bis 600 nm. Die Fluoreszenzemissionsstrahlung liegt dabei genau im Bereich der maximalen Absorption des Initiators im Kunststoff-Füllungsmaterial.

Es kann vorgesehen sein, das Kunststoff-Füllungsmaterial mit einem fluoreszierenden Füllstoff, z.B. Keramik, zu versehen.

Vorzugsweise wird ein gepulster oder gechoppter Laserlichtstrahl verwendet. Es ist auch möglich, einen kontinuierlichen Laserlichtstrahl zu verwenden.

Die Applikation von Kunststoff erfolgt intermittierend. Neben pneumatischer Applikation können ebenso mechanische oder elektro-mechanische Applikationen des nicht ausgehärteten Füllungsmaterials erfolgen.

Die Kunststoff-Füllungsmaterialschichten können mit Hilfe eines sauerstofffreien Treibgases eingebracht werden.

Durch die Anwendung des sauerstofffreien Treibgases entsteht eine bessere Kunststoff-Füllungsqualität.

Bei Applikation von gepulstem Laserlicht wird eine Energiedichte des Laserlichtstrahls von weniger als 2 J/cm², vorzugsweise weniger als 1,5 J/cm², zum Aushärten des Kunststoff-Füllungsmaterials verwendet.

Zur Entfernung von Smearlayer-Schichten kann das Laserlicht mit erhöhter Energiedichte appliziert werden. Damit ist ohne Wechsel des Applikationsinstrumentes auch eine Entfernung der Smearlayer-Schicht vor dem Einbringen des Kunststoff-Füllungsmaterials möglich.

Im folgenden wird unter Bezugnahme auf die Zeichnungen ein Ausführungsbeispiel der Erfindung näher erläutert.

Es zeigen:
- Fig. 1: die erfindungsgemäße Vorrichtung zum Aushärten eines lichthärtenden Kunststoff-Füllungsmaterials,
- Fig. 2: eine vergrößerte Darstellung einer mit mehreren Kunststoff-Füllungsmaterialschichten teilweise ausgefüllten Zahnkavität,
- Fig. 3: die Fluoreszenzlicht-Emissionsintensität von Dentin bei Anregung mit Laserlicht, und
- Fig. 4: die Lichtextinktion des Kunststoffes, mit und ohne Initiator und die relative Fluoreszenz-Emission der Zahnhartsubstanz in Abhängigkeit von der Wellenlänge.

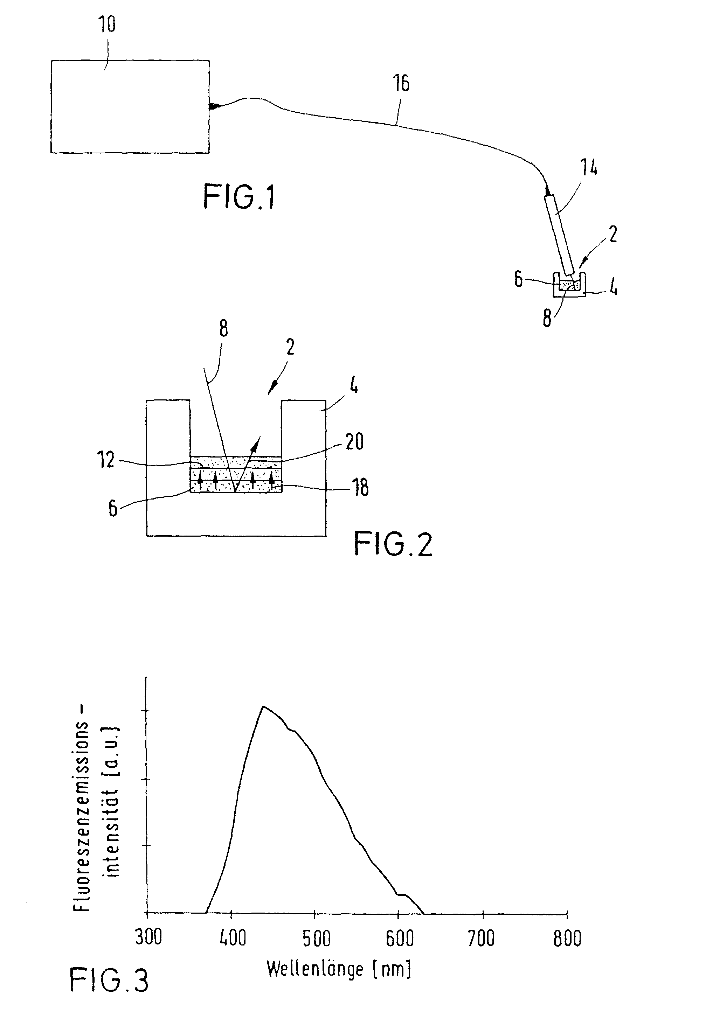

Die in Fig. 1 gezeigte Vorrichtung zum Aushärten eines Kunststoff-Füllungsmaterials, z.B. eines Kunststoff-Kompositmaterials, für Zahnfüllungen besteht aus einer Laserlichtquelle 10, einem flexiblen Lichtleiter 16, der das Laserlicht von der Laserlichtquelle 10 einem Applikator 14 zuführt. Mit Hilfe des Applikators 14 kann der Laserlichtstrahl 8 auf eine Zahnkavität 2 in der Zahnhartsubstanz 4 eines Zahnes gerichtet werden. In der Zahnkavität 2 befindet sich ein lichthärtendes Kunststoff-Füllungsmaterial 6, das vorzugsweise in geringen Mengen, die sich zu dünnen Schichten 12 ausbreiten, in die Zahnkavität 2 eingebracht wird und unmittelbar danach mit Hilfe des Laserlichtstrahls 8 schichtweise ausgehärtet wird.

Das Kunststoff-Füllungsmaterial 6 besteht aus einem üblichen fotopolymerisierenden Kunststoffwerkstoff, der einen hohen Anteil eines anorganischen Füllstoffes enthalten kann. Es ist auch bekannt, Glaspartikel verschiedener Teilchengröße dem Füllungskunststoff hinzuzufügen, um die Abbindekontraktion des Kunststoffes zu verringern und die Abrasion zu verringern.

Es ist wesentlich, das Kunststoff-Füllungsmaterial 6 in Form von dünnen Kunststoff-Füllungsmaterialschichten 12 in die Zahnkavität 2 einzubringen und diese dann unmittelbar nach dem Einbringen schichtweise auszuhärten. Diese inkrementale Vorgehensweise erlaubt ein weitestgehend spannungsfreies Aushärten der einzelnen Kunststoff-Füllungsmaterialschichten 12, so daß letztlich die gesamte Zahnfüllung spannungsfrei aufgebaut werden kann. Das nicht ausgehärtete Kunststoffmaterial kann ohne Füllstoffe mit Hilfe einer in einem gegebenenfalls separat vorgesehenen Applikator angeordneten Düse eingebracht werden, wobei die Füllstoffe mit Hilfe einer zweiten Düse simultan oder abwechselnd in die Kavität eingebracht werden. Dabei können zwei Düsen für das Kunststoff-Füllungsmaterial vorgesehen sein, wenn ein Zwei-Komponentenmaterial verwendet wird.

Das Kunststoff-Füllungsmaterial 6 wird mit Hilfe des Laserlicht-Applikators 14 oder mit Hilfe eines separaten Applikators tropfenweise in die Zahnkavität 2 eingebracht und mit Hilfe des intermittierend im Wechsel mit der Kunststoffeinspritzung eingeschalteten Laserlichts sofort ausgehärtet. Somit wird in ständiger Folge ein Tropfen Kunststoff eingespritzt, der sich in der Zahnkavität 2 zu einer dünnen Kunststoff-Füllungsmaterialschicht 12 ausbreitet und unmittelbar anschließend von dem Laserlicht ausgehärtet wird. Ein derartiger Kunststoff-Füllungsmaterial-Einspritz- und Aushärtezyklus kann mit einer hohen Repetitionsrate von beispielsweise 20 Hz durchgeführt werden, wodurch eine schnelle Mehrschichten-Inkrementfüllung durchführbar ist und das Kunststoff-Füllungsmaterial 6 blasenfrei aushärtbar ist.

In Fig. 2 ist schematisch eine Zahnkavität 2 in einer Zahnhartsubstanz 4 dargestellt. In der Zahnkavität 2 sind mehrere Kunststoff-Füllungsmaterialschichten 12 übereinander angeordnet. Der einfallende Laserlichtstrahl 8 wird auf dem Boden der Zahnkavität 2 reflektiert, wobei der reflektierte Laserlichtstrahl 20 mit verringerter Intensität die Kunststoff-Füllungsmaterialschichten 12 erneut durchdringen kann. Ein Teil der mit dem Laserlichtstrahl 8 eingebrachten Energie wird dazu verwendet, die Zahnhartsubstanz 4 zu einer Emission von Fluoreszenz-Lichtstrahlen 18 anzuregen, die von den Wandungen der Zahnkavität 2 ausgehen und aufgrund ihres Wellenlängenspektrums zwischen 400 und 600 nm überwiegend zur Aushärtung des Kunststoff-Füllungsmaterials 6 beitragen.

Fig. 3 zeigt die Fluoreszenzlicht-Emissionsintensität der Zahnhartsubstanz 4 angeregt von einem Stickstofflaser (337 nm) in Abhängigkeit von der Wellenlänge.

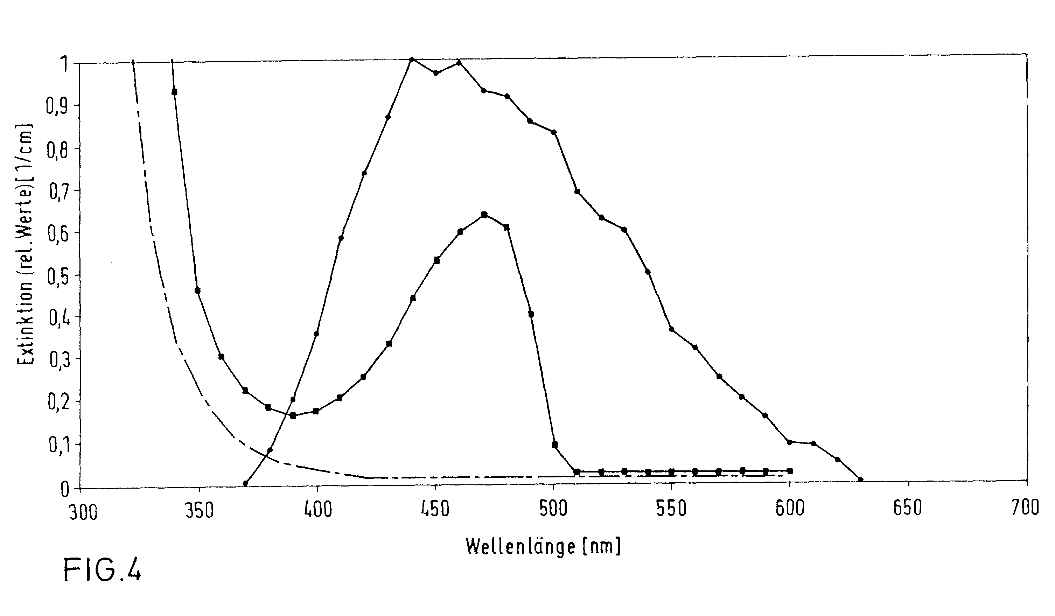

Fig. 4 zeigt das Extinktionsverhalten des Kunststoff-Füllungsmaterials in Abhängigkeit von der Wellenlänge. Die unterste Kurve ohne ausgeprägtes Maximum bezieht sich auf das reine Kunststoffmaterial ohne Initiator. Die mittlere Kurve mit einem ausgeprägten Maximum bei ca. 470 nm ist die gemessene tatsächliche Extinktion des verwendeten Kunststoff-Füllungsmaterials mit einem Initiator (Campfer-Chinon). Die dritte Kurve mit einem Maximum zwischen 430 und 460 nm repräsentiert die Wellenlänge der Fluoreszenz-Emission. Üblicherweise werden derartige Kunststoff-Füllungsmaterialien mit Lichtpolymerisationsgeräten ausgehärtet, die in einem Wellenlängenbereich zwischen 400 und 500 nm arbeiten, also im Maximum des durch den Foto-Initiator bedingten Absorptionspeaks.

Bei der beschriebenen Apparatur ist allerdings vorgesehen, Laserlicht mit einer Wellenlänge im Bereich zwischen 350 bis 440 nm, vorzugsweise im Bereich zwischen 370 und 410 nm, zu verwenden. Wie aus Fig. 4 ersichtlich ist, erfährt Laserlicht dieser Wellenlänge im Kunststoff-Füllungsmaterial 6 in diesem Bereich ein Minimum an Absorption, so daß das Laserlicht bei erhöhter Eindringtiefe in geringerem Umfang absorbiert wird. Damit kann das Laserlicht durch die Kunststoff-Füllungsmaterialschichten 12 hindurch auf die Zahnhartsubstanz treffen, wo der Laserlichtstrahl 8 zu einem Teil reflektiert wird, während der andere Teil die Zahnhartsubstanz 4 zu einer Fluoreszenz-Lichtemission anregt. Diese Fluoreszenz-Lichtstrahlung 18 erfolgt in einem Wellenlängenbereich zwischen 400 und 600 nm, nämlich im Bereich des Absorptionsmaximums des Kunststoff-Füllungsmaterials 6. Dies hat zur Folge, daß insbesondere die erste Kunststoff-Füllungsmaterialschicht sich besonders fest an die Zahnhartsubstanz 4 anbindet, da die Polymerisation nunmehr weit überwiegend aufgrund der Fluoreszenz-Lichtemission und nicht aufgrund der direkten Bestrahlung mit Laserlicht erfolgt. Die Aushärtung der Kunststoff-Füllungsmaterialschicht 12 erfolgt somit vom Zahn ausgehend auf die Oberfläche der Füllung zu. Diese Aushärtung von den Wänden der Zahnkavität 2 aus führt, wie bereits erwähnt, zu einer äußerst guten Haftung der ersten Kunststoff-Füllungsmaterialschicht 12 auf der Zahnhartsubstanz 4 und vermeidet die eingangs genannten Probleme hoher Spannungskräfte mit der Folge von Randspalten.

Auch die weiteren Kunststoff-Füllungsmaterialschichten 12 werden bis zu einer bestimmten Schichtstärke sehr gut von dem Laserlichtstrahl 8 durchdrungen, so daß der positive Effekt der Fluoreszenz-Emissionsstrahlen auch bis zu einer bestimmten Tiefe der Kunststoff-Füllungsmaterialschichten 12 ausgenutzt werden kann. In jedem Fall wirkt sich die Fluoreszenz-Emissionsstrahlung im Bereich der Wandungen der Zahnkavität 2 auch bei tieferen Zahnkavitäten 2 positiv aus. Die Aushärtung des Kunststoff-Füllungsmaterials 6 in Richtung auf die Begrenzungen der Zahnkavität hin führt dazu, daß das Randspaltenproblem nicht mehr auftreten kann und führt des weiteren dazu, daß die beim Aushärten entstehenden Spannungen erheblich reduziert werden. Zusätzlich werden die Spannungen wie bereits erläutert auch durch das Auftragen dünner Kunststoff-Füllungsmaterialschichten 12 reduziert, da kein großes Schrumpfvolumen vorliegt.

Mit großem Abstand von der Zahnhartsubstanz nimmt die Effektivität der Fluoreszenzstrahlung ab, so daß die Bestrahlungsdosis (Leistung oder Bestrahlungszeit) erhöht werden muß.

Anstelle des zuvor beschriebenen Füllmaterials aus Glaspartikeln ist es möglich, als Füllstoff fluoreszierendes Material dem Kunststoff-Füllungsmaterial 6 beizufügen. Dieser fluoreszierende Füllstoff besteht beispielsweise aus Keramikpartikeln. Das Kunststoff-Füllungsmaterial 6 mit fuoreszierenden Füllstoff wäre bei tieferen Zahnkavitäten 2 von Vorteil, um in allen Schichten einer Kunststoffüllung auch bei niedrigen Bestrahlungsdosen einen ausreichend hohen Polymerisationsgrad zu erzielen.

Das Aufbringen dünner Kunststoff-Füllungsmaterialschichten 12 hat den Vorteil, daß auch die Polymerisationshitze, die durch die Polymerisationsreaktion entsteht, deutlich verringert wird.

Das verwendete Laserlicht ist vorzugsweise gepulst, wobei auch ein Dauerstrichlaser oder geschoppte Laser verwendet werden können. Bei Verwendung einer gepulsten Laserlichtquelle wird eine Energiedichte von weniger als 2 J/cm², vorzugsweise weniger als 1,5 J/cm², benötigt. Mit Hilfe einer Laserlichtquelle sind mittlere Leistungsdichten von mehr als 1 W/cm² erzielbar. Dadurch ergeben sich kurze Bestrahlungszeiten.

Das Laserlicht kann vor dem Füllen der Zahnkavität 2 mit dem Kunststoff-Füllungsmaterial 6 ohne Wechsel des Applikators 14 auch für eine Konditionierung der Zahnkavität 2 in der Zahnhartsubstanz 4 verwendet werden.

Mit Hilfe einer erhöhten Energiedichte zwischen ca. 2 J/cm² und 6 J/cm² kann nämlich der Laserlichtstrahl 8 dazu benutzt werden, den Smearlayer, das ist eine Schicht aus abgetragenem Dentin nach einer Bohrer-Präparation, zu entfernen. Dabei werden alle Dentinkanälchen weit geöffnet. In diese geöffneten Kanäle kann das Kunststoff-Füllungsmaterial 6 dann bei der anschließenden Füllung hineinfließen und die mechanische Haftung der Füllung erhöhen.

## Patentansprüche

1. Vorrichtung zum Aushärten eines in einer Zahnkavität (2) der Zahnhartsubstanz (4) angeordneten lichthärtenden Kunststoff-Füllungsmaterials (6), mit einer Laserlichtquelle (10) und mit einem Applikator (14) für das Kunststoff-Füllungsmaterial (6), der mit der Laserlichtquelle (10) über einen Lichtleiter (16) verbunden ist,
**dadurch gekennzeichnet,**
daß der Applikator (14) oder ein separater Applikator Mittel aufweist um im Wechsel mit einem intermittierend betriebenen Laserlichtstrahl (8) Tröpfchen des Kunststoff-Füllungsmaterials in die Zahnkavität zu spritzen.

2. Vorrichtung nach Anspruch 1, dadurch gekennzeichnet, daß die Laserlichtquelle (10) einen Laserlichtstrahl (8) mit einer Wellenlänge im Bereich zwischen 350 bis 440 nm, vorzugsweise 360 bis 425 nm, emittiert.

3. Vorrichtung nach Anspruch 1 oder 2, dadurch gekennzeichnet, daß der oder die Applikatoren (14) zwei Düsen für ein Kunststoff-Füllungsmaterial aus zwei Komponenten aufweisen.

4. Vorrichtung nach einem der Ansprüche 1 bis 3, dadurch gekennzeichnet, daß die Wellenlänge des von der Laserlichtquelle (10) emittierten Laserlichtes im Bereich von ca. 370 bis 410 nm liegt.

5. Vorrichtung nach einem der Ansprüche 1 bis 4, dadurch gekennzeichnet, daß die Laserlichtquelle (10) gepulst oder gechoppt ist.

6. Vorrichtung nach einem der Ansprüche 1 bis 4, dadurch gekennzeichnet, daß die Laserlichtquelle (10) ein Dauerstrichlaser ist.

7. Vorrichtung nach Anspruch 5, dadurch gekennzeichnet, daß die Energiedichte des gepulsten oder gechoppten Laserlichtstrahls (8) weniger als ca. 2 J/cm², vorzugsweise weniger als ca. 1,5 J/cm², beträgt.

8. Vorrichtung nach einem der Ansprüche 1 bis 7, dadurch gekennzeichnet, daß die Mittel des Applikators (14) Kunststoff-Füllungsmaterialschichten (12) pneumatisch, mechanisch oder elektro-mechanisch in die Zahnkavität (2) einspritzen.

9. Vorrichtung nach einem der Ansprüche 1 bis 6, dadurch gekennzeichnet, daß die Laserlichtquelle (10) einen Laserlichtstrahl (8) mit erhöhter Energiedichte zwischen 2 J/cm² und 6 J/cm² zur Entfernung einer Smearlayer-Schicht emittiert.

10. Vorrichtung nach einem der Ansprüche 1 bis 9, dadurch gekennzeichnet, daß das Kunststoff-Füllungsmaterial (6) einen erhöhten Initiatoranteil von ca. 2 % bis 5% aufweist.

## Claims

1. A device for curing a photocurable plastic filler (6) disposed in a dental cavity (2) of the hard tooth substance (4), comprising a laser light source (10) and an applicator (14) for the plastic filler (6) that is connected to the laser light source (10) via a light conductor (16),
characterized in
that the applicator (14) or a separate applicator comprises means for injecting drops of the plastic filler into the dental cavity, alternating with an intermittently operated laser light beam (8).

2. The device of claim 1, characterized in that the laser light source (10) emits a laser light beam (8) with a wavelength in a range between 350 to 440 nm, preferably 360 to 425 nm.

3. The device of claim 1 or 2, characterized in that the applicator or the applicators (14) have two nozzles for a two-component plastic filler.

4. The device of one of claims 1 to 3, characterized in that the wavelength of the laser light emitted by the laser light source (10) is in the range from about 370 to 410 nm.

5. The device of one of claims 1 to 4, characterized in that the laser light source (10) is pulsed or chopped.

6. The device of one of claims 1 to 4, characterized in that the laser light source (10) is a continuous wave laser.

7. The device of claim 5, characterized in that the power density of the pulsed or chopped laser light beam (8) is less than about 2 J/cm², preferably less than about 1.5 J/cm².

8. The device of one of claims 1 to 7, characterized in that the means of the applicator (14) inject the plastic filler layers (12) pneumatically, mechanically or electro-mechanically into the dental cavity (2).

9. The device of one of claims 1 to 6, characterized in that the laser light source (10) emits a laser light beam (8) with an increased power density between 2 J/cm² and 6 J/cm² to remove a smear layer.

10. The device of one of claims 1 to 9, characterized in that the plastic filler (6) has an increased initiator percentage of about 2 % to 5%.

## Revendications

1. Dispositif de durcissement d' une matière plastique de remplissage (6) photodurcissable disposée dans une cavité dentaire (2) de la substance dure (4) d'une dent, comportant une source de lumière laser (10) et un applicateur (14) pour la matière plastique de remplissage (6), qui est relié à la source de lumière laser (10) par un guide de lumière (16),
caractérisé en ce que l'applicateur (14), ou un applicateur séparé, comporte des moyens pour injecter des gouttes de matière plastique de remplissage dans la cavité dentaire en alternance avec un faisceau laser (8) actionné par intermittence.

2. Dispositif selon la revendication 1, caractérisé en ce que la source de lumière laser (10) émet un faisceau laser (8) ayant une longueur d'onde située dans une plage allant de 350 à 440 nm, de préférence de 360 à 425 nm.

3. Dispositif selon la revendication 1 ou 2, caractérisé en ce que le ou les applicateurs (14) comportent deux buses pour une matière plastique de remplissage constituée de deux composants.

4. Dispositif selon l'une des revendications 1 à 3, caractérisé en ce que la longueur d'onde de la lumière laser émise par la source de lumière laser (10) est située dans une plage allant d'environ 370 à 410 nm.

5. Dispositif selon l'une des revendications 1 à 4, caractérisé en ce que la source de lumière laser (10) est pulsée ou découpée.

6. Dispositif selon l'une des revendications 1 à 4, caractérisé en ce que la source de lumière laser (10) est un laser continu.

7. Dispositif selon la revendication 5, caractérisé en ce que la densité de flux énergétique du faisceau laser (8) pulsé ou découpé est inférieure à 2 J/cm² environ, de préférence inférieure à 1,5 J/cm² environ.

8. Dispositif selon l'une des revendications 1 à 7, caractérisé en ce que les moyens de l'applicateur (14) injectent des couches (12) de matière plastique de remplissage dans la cavité dentaire (2) de façon pneumatique, mécanique ou électromécanique.

9. Dispositif selon l'une des revendications 1 à 6, caractérisé en ce que la source de lumière laser (10) émet un faisceau laser (8) avec une densité de flux énergétique élevée comprise entre 2 J/cm² et 6 J/cm² pour éliminer une couche de salissure.

10. Dispositif selon l'une des revendication 1 à 9, caractérisé en ce que la matière plastique de remplissage (6) comporte une proportion élevée d'initiateur d'environ 2% à 5%.
